# EUROPEAN PATENT SPECIFICATION

(11) **EP 2 907 140 B1**
(45) Date of publication and mention of the grant of the patent: **21.06.2017**
(21) Application number: 13865249.0
(22) Date of filing: 07.10.2013
(51) Int. Cl.: G21C 17/007, G21C 17/013, G21C 19/20, G21C 13/00

(54) **APPARATUS AND METHOD TO INSPECT, MODIFY, OR REPAIR NUCLEAR REACTOR CORE SHROUDS**
VORRICHTUNG UND VERFAHREN ZUR INSPEKTION, MODIFIZIERUNG ODER REPARATUR VON NUKLEARREAKTORKERNUMMANTELUNGEN
APPAREIL ET PROCÉDÉ PERMETTANT D'INSPECTER, DE MODIFIER OU DE RÉPARER DES ENVELOPPES DE COEUR DE RÉACTEUR NUCLÉAIRE

(30) Priority: 09.10.2012 US 201261711240 P; 13.03.2013 US 201313798474
(43) Date of publication of application: 19.08.2015
(73) Proprietor: Westinghouse Electric Company LLC, Cranberry Township, PA 16066 (US)
(72) Inventor: FOLEY, Kevin J., Chattanooga, Tennessee 37421 (US); EVERETT, Mark Steve, Hixson, Tennessee 37343 (US); BARRETT, Charles R., Ooltewah, Tennessee 37363 (US)
(74) Representative: Gallo, Wolfgang
(86) International application number: PCT/US2013/063676
(87) International publication number: WO 2014/099107

(56) References cited:
- DE-A1- 3 112 201
- JP-A- H07 110 320
- JP-A- H09 159 788
- JP-A- H09 159 788
- JP-A- H09 211 182
- JP-A- H11 311 692
- JP-A- H11 311 692
- JP-A- 2006 061 976
- US-A1- 2008 317 192
- US-A1- 2010 242 247

## Description

### Field of the Invention

This invention generally concerns robotic systems and is specifically concerned with an improved apparatus and method for remotely inspecting, modifying or repairing a core shroud in a nuclear reactor.

### Background of the Invention

A nuclear reactor produces electrical power by heating water in a reactor pressure vessel that contains a nuclear fuel core in order to generate steam which is used in turn to drive a steam turbine. The reactor pressure vessel includes a cylinder surrounding the nuclear fuel core. This cylinder is the core shroud. Feed water is admitted into the reactor pressure vessel and flows through an annular region which is formed between the reactor pressure vessel and the core shroud. Within the annular region, jet pump assemblies are circumferentially distributed around the core shroud. The core shroud includes various welds which are later discussed in detail herein. A core shroud head is positioned atop the core shroud. The material of the core shroud and associated welds is austenitic stainless steel having reduced carbon content. The heat-affected zones of the shroud welds have residual weld stresses. Therefore, the mechanisms are present for the shroud welds to be susceptible to stress corrosion cracking.

Stress corrosion cracking in the heat affected zone of any shroud weld diminishes the structural integrity of the shroud. In particular, a cracked shroud increases the risks posed by a Loss-of-Coolant Accident (LOCA) or seismic loads. During a LOCA, the loss of coolant from the reactor pressure vessel produces a loss of pressure above the shroud head and an increase in pressure inside the shroud, i.e., underneath the shroud head. The result is an increased lifting force on the shroud head and on the upper portions of the shroud to which the shroud head is bolted. If the core shroud has fully cracked girth welds, the lifting forces produced during a LOCA could cause the shroud to separate along the areas of cracking, producing undesirable leaking of reactor coolant. Also, if the shroud weld zones fail due to stress corrosion cracking, there is a risk of misalignment from seismic loads and damage to the core and the control rod components, which would adversely affect control rod insertion and safe shutdown.

Thus, the core shroud is examined periodically to determine its structural integrity and the need for repair. Ultrasonic inspection is a known technique for detecting cracks in nuclear reactor components. The inspection area of primary interest is the outside surface of the core shroud and the horizontal mid-shroud attachment welds. However, the core shroud is difficult to access. Installation access is limited to the annular space between the outside of the shroud and the inside of the reactor pressure vessel, between adjacent jet pumps. Scanning operation access is additionally restricted within the narrow space between the shroud and jet pumps. The inspection areas are highly radioactive, and are located under water 50 to 80 feet below the operator's work platform. Thus, inspection of the core shroud in operational nuclear reactors requires a robotic device which can be installed remotely and operated within a narrowly restricted space.

Remote operation is mandatory due to safety risks associated with radiation in the reactor. During reactor shutdown, servicing of components requires installation of inspection manipulators or devices 30 to 100 feet deep within reactor coolant. The inspection equipment typically consists of manually controlled poles and ropes to manipulate servicing devices and/or positioning of these devices. Relatively long durations are required to install or remove manipulators and can impact the plant shutdown duration. In addition, different inspection scopes can require several manipulator reconfigurations requiring additional manipulator installations and removals. The long durations cannot only impact plant shutdown durations, but also increase personnel radiation and contamination exposure.

Plant utilities have a desire to reduce the number of manipulator installations and removals to reduce radiological exposure as well as cost and plant outage impact. This invention allows the number of reconfigurations, installations and removals to be minimized. In addition, plant utilities have relatively small working areas near the access point of the reactor cavity. Therefore, the size of the manipulators can impact other activities during plant shutdown. The design of this invention allows the elimination of large track ring typically utilized on similar equipment. Plant utilities also desire flexible and effective coverage on the reactor core shroud. This invention allows the manipulator operations to position end effectors in various locations on the shroud which are often inaccessible to currently designed tooling. The small profile and flexible axes system of this invention provide efficient core shroud coverage which can be significantly greater than the coverage provided by currently existing equipment. Document JPH07110320A discloses an apparatus for remotely inspecting a nuclear reactor core shroud according to the preamble of claim 1.

### SUMMARY OF THE INVENTION

The invention provides apparatus and methods for inspecting a core shroud in a reactor vessel according to claims 1 and 8.

### BRIEF DESCRIPTION OF THE DRAWINGS

A further understanding of the invention can be gained from the following description of the preferred embodiments when read in conjunction with the accompanying drawings in which:
Figure 1A is a schematic showing an elevational view of pertinent portions of a conventional BWR, in accordance with the prior art;
Figure 1B is a sectional view of a portion of the core shroud incorporated in the BWR depicted in Figure 1A, in accordance with the prior art;
Figure 2 is a front view of a core shroud inspecting apparatus, in accordance with certain embodiments of the invention;
Figure 3 is a perspective view of the core shroud inspecting apparatus of Figure 2 showing a fixed gear rack mechanism, in accordance with certain embodiments of the invention;
Figure 4 is a perspective view of the core shroud inspecting apparatus of Figure 2 showing a movable bearing system, in accordance with certain embodiments of the invention;
Figure 5 is a detailed view of the lower track of the core shroud inspecting apparatus of Figure 2, in accordance with certain embodiments of the invention;
Figures 6A through 6D are detailed views of the precision positioners for the end effectors of the core shroud inspecting apparatus of Figure 2, in accordance with certain embodiments of the invention; and
Figure 7 is a front view of the core shroud inspecting apparatus of Figure 2 installed on a core shroud of a nuclear reactor.

### DETAILED DESCRIPTION OF THE PREFERRED EMBODIMENTS

It will be understood that, although the terms first, second, etc. may be used herein to describe various elements, these elements should not be limited by these terms. There terms are only used to distinguish one element from another. For example, a first element could be termed a second element, and similarly, a second element could be termed a first element, without departing from the scope of the embodiments. As used herein, the term "and/or" includes any and all combinations of one or more of the associated listed items.

It should be understood that when an element of component is referred to as being "on", "connected to," "coupled to," or "covering" another element or layer, it may be directly on, connected to, coupled to, or covering the other element or layer or intervening elements or components may be present.

Spatially relative terms (e.g., "beneath," "below," "lower," "above," "upper," and the like) may be used herein for ease of description to describe one element or feature's relationship to another element(s) or feature(s) as illustrated in the figures. It should be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "below" may encompass both an orientation of above and below. The device may be otherwise oriented (rotated 90 degrees or at other orientations) and the spatially relative descriptors used herein interpreted accordingly.

The singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the present or addition of one or more other features, integers, steps, operations, elements, components and/or groups thereof.

The invention relates to robotic devices for remotely inspecting, modifying or repairing a core shroud of a reactor pressure vessel in a nuclear power plant. In certain embodiments, the nuclear power plant includes a light water reactor, such as a boiling water reactor or a pressurized water reactor. The reduced thickness and the two-axis positioner of the device allow for positioning and operation of the device in the narrow annulus space provided between the core shroud and a wall of the reactor pressure vessel. Further, these features allow the device to be maneuvered and configured circumferentially and vertically around jet pumps (and other obstructions) that are located in the annulus space.

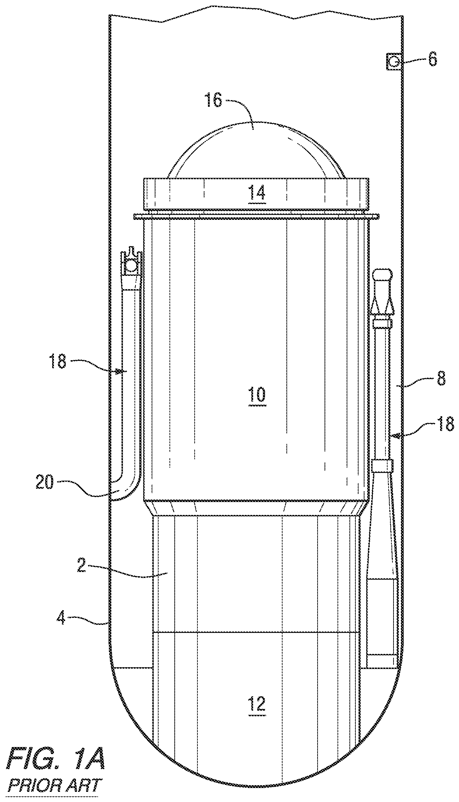

Referring to Figure 1A, there is illustrated a core shroud 2 in a reactor pressure vessel (RPV) 4 of a conventional boiling water reactor (BWR). Feedwater is admitted into the RPV 4 via a feedwater inlet (not shown) and a feedwater sparger 6, which is a ring-shaped pipe having suitable apertures for circumferentially distributing the feedwater inside the RPV 4. The feedwater from the sparger 6 flows downwardly through a downcomer annulus 8, which is an annular region formed between the core shroud 2 and the RPV 4.

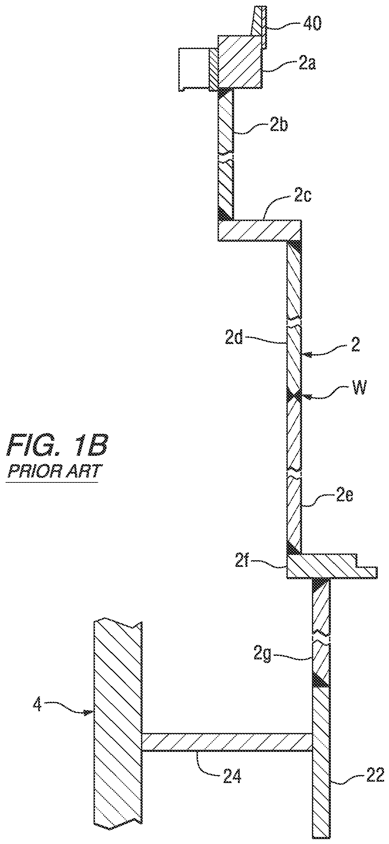

The core shroud 2 is a stainless steel cylinder surrounding the nuclear fuel core, the location of which is generally designated by numeral 10 in Figure 1. The core is made up of a plurality of fuel bundle assemblies (not shown). Each array of fuel bundle assemblies is supported at the top by a top guide and at the bottom by a core plate (neither of which are shown). The core top guide provides lateral support for the top of the fuel assemblies and maintains the correct fuel channel spacing to permit control rod insertion.

The feedwater flows through the downcomer annulus 8, into the jet pumps 18, and into the core lower plenum 12. The feedwater subsequently enters the fuel assemblies, wherein a boiling boundary layer is established. A mixture of water and steam enters a core upper plenum 14 under a shroud head 16. The steam-water mixture than flows through vertical standpipes (not shown) atop the shroud head 16 and enters steam separators (not shown), which separate liquid water from steam. The liquid water then mixes with feedwater in the mixing plenum, which mixture then returns to the reactor core via the downcomer annulus 8. The steam is withdrawn from the RPV via a steam outlet.

The BWR also includes a coolant recirculation system which provides the forced convection flow through the core which is necessary to attain the required power density. A portion of the water is removed from the lower end of the downcomer annulus 8 via a recirculation water outlet (not visible in Figure 1) and forced by a centrifugal recirculation pump (not shown) into jet pump assemblies 18 (two of which are shown in Figure 1A) via recirculation water inlets 20. The BWR has two recirculation pumps, each of which provides the driving flow for a plurality of jet pump assemblies. The jet pump assemblies are circumferentially distributed around the core shroud 2.

Referring to Figure 1B, there is illustrated the core shroud 2 in detail. There is a shroud head flange 2a for supporting the shroud head 16, a circular cylindrical upper shroud wall 2b having a top end welded to shroud head flange 2a, an annular top guide support ring 2c welded to the bottom end of the upper shroud wall 2b, a circular cylindrical middle shroud wall having a top end welded to top guide support ring 2c and consisting of upper and lower shell sections 2d and 2e joined by mid-shroud attachment weld, and an annular core plate support ring 2f welded to the bottom end of the middle shroud wall and to the top end of a lower shroud wall 2g. The entire shroud is supported by a shroud support 22, which is welded to the bottom of lower shroud wall 2g, and by annular jet pump support plate 24, which is welded at its inner diameter to shroud support 22 and at its outer diameter to RPV 4.

The material of the shroud and associated welds is austenitic stainless steel having reduced carbon content. The heat-affected zones of the shroud girth welds, including the mid-shroud attachment weld, have residual weld stresses. Therefore, the mechanisms are present for mid-shroud attachment weld W and other girth welds to be susceptible to stress corrosion cracking.

The apparatus of the invention is in contact with the core shroud and operated in the annulus formed between the reactor pressure vessel and the core shroud to perform an inspection of the core shroud and any welds associated therewith. The apparatus includes an upper partial track which is positioned, e.g., placed on or connected to, a portion of the core shroud, such as an upper annular rim of the core shroud. In one embodiment, the upper partial track is placed on the steam dam of the core shroud and is supported thereon by its center of gravity. The upper partial track guides a precision head and rigid frame structure which is movably coupled to the upper partial track. The rigid frame structure extends vertically downward from the precision head. The precision head and frame structure includes an electric motor and ball bearings or the like which allows the structure to travel horizontally along the upper partial track. Further, the upper track contains motors and brakes which are systemically configured to allow the use of this apparatus without a complete track ring. The head and frame structure houses a sensor positioner for performing inspections or repairs on upper barrel regions of the core shroud. The precision head and frame are also operable to position a moveable lower track. The lower track region houses a lower arm and positioner to perform inspections or repairs on middle and lower reactor core shroud barrel regions. The positioner is a two-axis positioner which allows displacement of the arm vertically and circumferentially along the core shroud. At least one sensor, such as an ultrasonic transducer, is connected to the lower arm for inspecting the core shroud. In certain embodiments, the lower arm can include multiple sensors in a spaced apart relationship to each other.

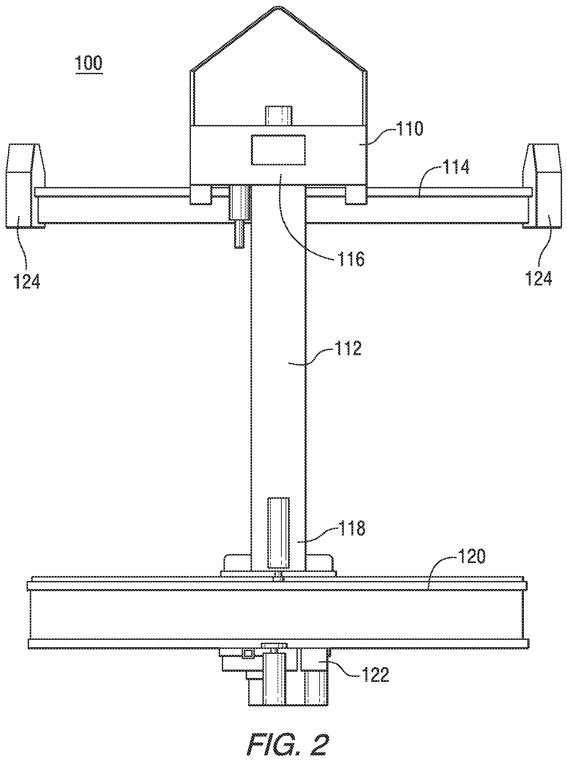

Referring to Figure 2, there is illustrated a core shroud inspecting apparatus generally referred to by reference character 100 for inspecting a core shroud in a nuclear reactor, in accordance with certain embodiments of the invention. The apparatus 100 includes a head 110, a frame 112 and a partial upper track 114. The frame 112 has an upper end 116 and an opposite lower end 118. The upper end 116 of the frame 112 is mounted to the head 110. The head 110 is connected to the partial upper track 114 for suitably moving in a horizontal direction relative to the partial upper track 114. The lower end 118 of the frame 112 is mounted to a lower track 120 for suitably moving the lower track 120 relative to the frame 112. A carriage 122 is coupled to the lower track 120 for suitably moving horizontally relative to the lower track 120. In certain embodiments, the partial upper track 114 and the lower track 120 are curved to suitably conform to the cylindrical shape of the core shroud in the nuclear reactor.

The partial upper track 114 includes a track brake system 124. When the track brake system 124 is activated, the partial upper track 114 remains stationary and the head 110 (and frame 112 mounted thereto) is horizontally movable along the partial upper track 114. When the track brake system 124 is deactivated or released, the partial upper track 114 can be driven into a different position along the rim of the core shroud. The track brake system 124 allows the head 110 and frame 112 to walk along the shroud without requiring a complete guide track ring. Thus, the head 110 and frame 112 are horizontally movable to drive along the partial upper track 114, or alternatively, the partial upper track 114 is horizontally movable to be driven into a different position along the rim of the core shroud.

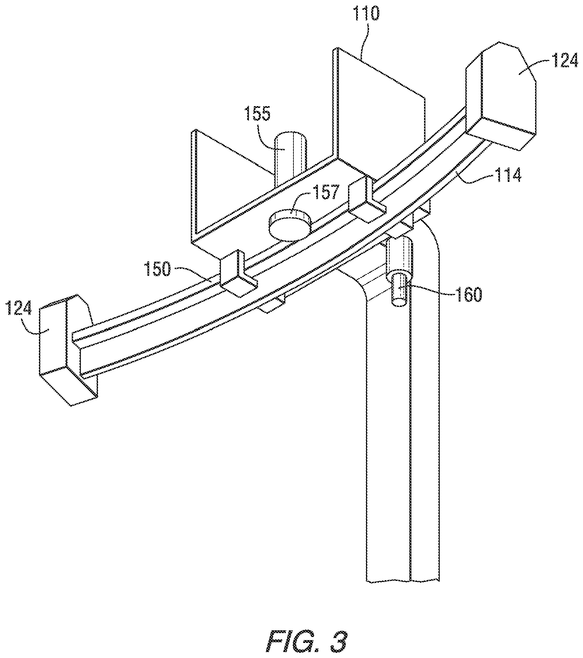

Referring to Figure 3, there is illustrated a fixed gear rack mechanism 150 for moving the partial upper track 114 along the core shroud. The fixed gear rack mechanism 150 interfaces with a positioning motor 155 and gear combination 157 located within the head 110. When the motor 155 is driven, the head 110 is moved relative to the partial upper track 114. If the track brake system 124 is applied, the partial upper track 114 will remain stationary relative to the core shroud and the head 110 moves relative to the partial upper track 114 and the core shroud. Alternatively, a positioning pin 160 can be pneumatically or hydraulically extended from the head 110 to react with reactor hardware positioned on the rim of the core shroud. If the position pin 160 is extended and the track brake system 124 is released, the head 110 remains stationary relative to the core shroud and the partial upper track will move relative to the core shroud. This provides for relocation of the entire apparatus 100 relative to the core shroud. The head motor 155 provides full position feedback so that global positioning of the entire apparatus is maintained and monitored within a tight tolerance.

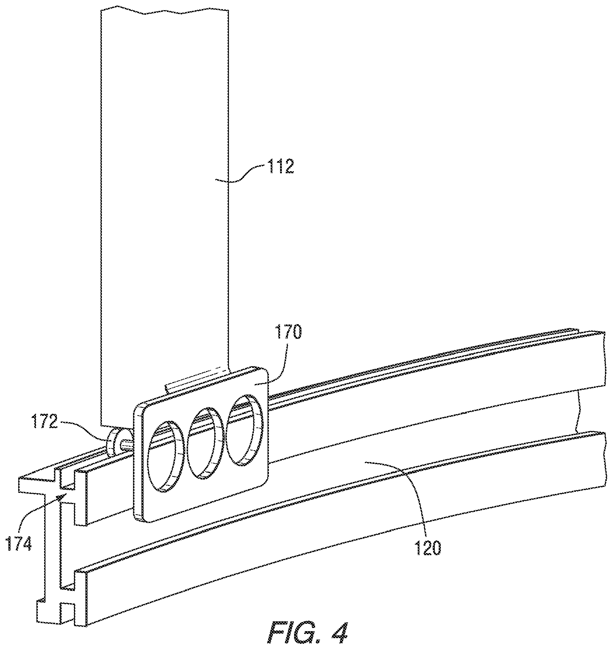

Referring to Figure 4, there is illustrated a movable bearing system 170 which allows the lower track 120 to be driven relative to the frame 112 and to reach positions along the core shroud which are outside of the typical boundaries and obstructions exhibited by known apparatus. The frame 112 contains bearing wheels 172 that roll along guides 174 coupled to the lower track 120.

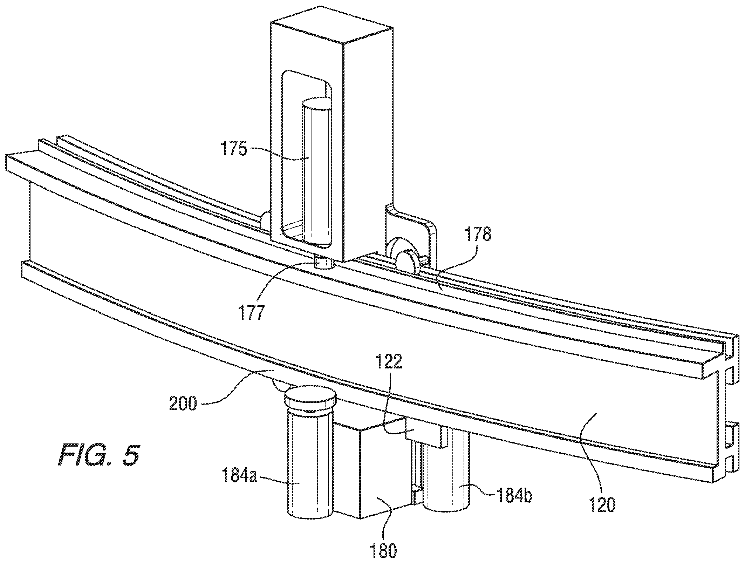

Referring to Figures 4 and 5, the frame 112 houses a fixed motor 175 and pinion gear 177 which can be driven and react against a rack gear 178 coupled to the lower track 120. Upon rotation of the frame motor 175, the lower track 120 moves relative to the frame 112.

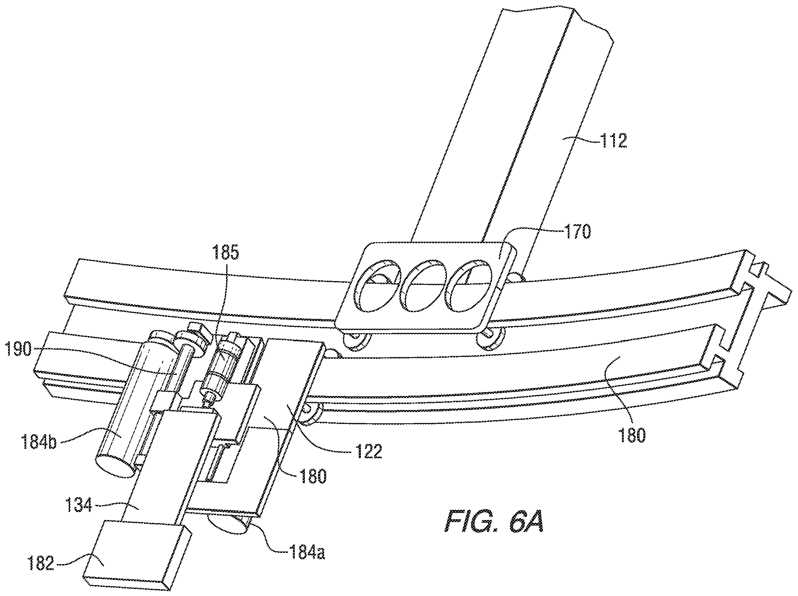

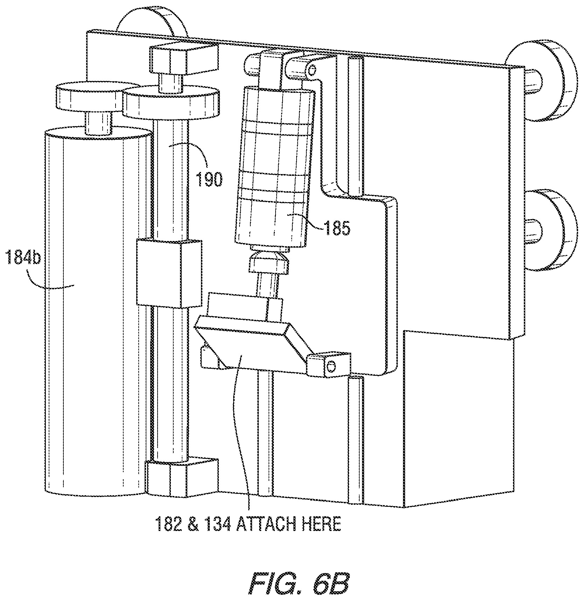

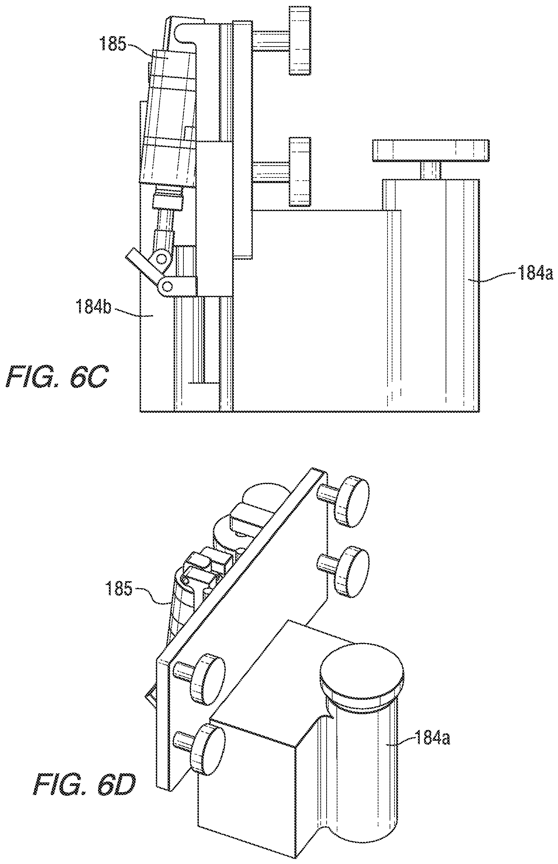

As shown in Figure 5 and Figures 6A-6D, the lower track 120 houses additional vertical and horizontal precision positioners 180 to provide precision position of tooling sensors or end effectors 182. The carriage system 122 on the lower track 120 houses two motor/gear combinations 184A,B and one pneumatic/hydraulic cylinder 185. One of the motor/gear combinations 184A interfaces with the rack gear 200 coupled to the lower track 120 which allows the carriage system 122 to move along the lower track 120. The other motor/gear combination 184B is coupled to a linear lead screw 190 which drives the pivoting cylinder 185 vertically in the general areas relative to the lower track 120. The pivoting cylinder 185 provides pivoting motion for the attached arm 134 and end effectors 182 for positioning the end effectors 182 away from reactor obstructions. Overall, the apparatus contains seventeen axes of motion to position sensor and end effectors 182 in an efficient method to minimize size, plant shutdown schedule impacts, and personnel radiological exposure, and to maximize end effector coverage on the reactor core shroud around obstructions.

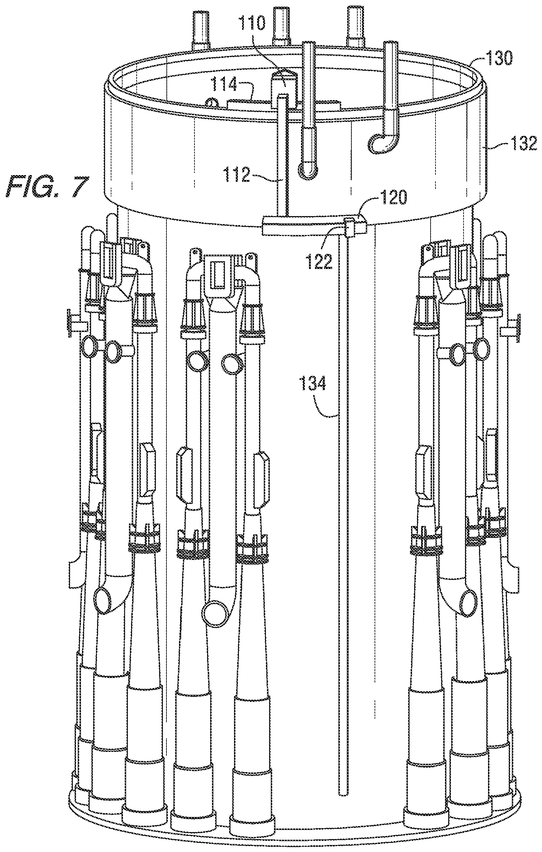

Referring to Figure 7, there is illustrated the core shroud inspecting apparatus 100 (shown in Figure 2) which is positioned on an annular rim 130 of a core shroud 132. The apparatus 100 extends vertically downward into an annulus space formed between the core shroud 132 and a reactor pressure vessel (not shown). Figure 7 includes the head 110, frame 112, partial upper track 114, lower track 120, and the carriage 122 (as shown Figure 2). Further, Figure 7 includes an arm 134 connected to the carriage 122 and extending vertically downward therefrom along the core shroud 132. At least one sensor (not shown) is attached to the arm 134. The sensor is capable to detect and analyze the surface of the core shroud 132 including any welds contained therein. Suitable sensors for use in this invention can include those devices, such as but not limited to ultrasonic sensors, which are known in the art for inspections. In certain embodiments, multiple sensors can be positioned in a spaced apart relationship to each other along a vertical length of the arm 134. Placement, e.g., spacing, of the sensors can be determined by and correspond to specific areas of the core shroud 132 to be inspected, such as the middle and lower barrels (not shown). In Figure 7, the lower track 120 is offset from the head 110 and the frame 112, and the carriage 122 with the arm 134 is offset from the lower track 120.

In this embodiment, the head and frame assembly is positioned on the annular rim of the core shroud and the frame portion vertically extends into the annulus formed between the core shroud and the reactor pressure vessel. The lower track is movably connected to the frame portion to allow the lower track to travel horizontally relative to the frame portion. Further, the carriage and arm assembly is movably connected to the lower track to allow the carriage and arm to travel horizontally relative to the lower track. At least one sensor is connected to the arm for the purpose of performing a scan to inspect the core shroud.

While specific embodiments of the invention have been described in detail, it will be appreciated by those skilled in the art that various modifications and alternatives to those details could be developed in light of the overall teachings of the disclosure. Accordingly, the particular embodiments disclosed are meant to be illustrative only and not limiting as to the scope of the invention which is to be given the full breadth of the appended claims.

## Claims

1. An apparatus (100) for remotely inspecting a nuclear reactor, comprising:
a core shroud (132) having an annular rim (130);
a partial upper track (114) positioned on the annular rim (130) of the core shroud (132) and horizontally movable along the annular rim (130);
an assembly, comprising:
a head (110) movably connected to the partial upper track (114) such that the head (110) is horizontally movable along the partial upper track (114);
a lower track (120);
a frame (112) having a first end (116) and a second end (118), the first end (116) being mounted to the head (110) and the second end (118) being connected to the lower track (120) such that the lower track (120) is horizontally movable along the core shroud (132);
a carriage (122) movably connected to the lower track (120);
a scan arm (134) connected to the carriage (122) and extending vertically downward along the core shroud (132);
at least one sensor (182) connected to the scan arm (134) for inspecting the core shroud (132);
a first driving mechanism (150) connected to the head (110) and to the partial upper track (114), and structured to drive the head (110) along the partial upper track (114) and to drive the partial upper track (114) along the annular rim (130);
a second driving mechanism (175) connected to the frame (112) and structured to drive the lower track (120) along the core shroud (132);
**characterized in that** the assembly further comprises
a third driving mechanism (184) connected to the carriage (122) and structured to drive the carriage (122) along the lower track (120); and
a track brake system (124) connected to the partial upper track (114),
wherein, when the track brake system (124) is activated, the partial upper track (114) remains stationary and the head (110) is movable along the partial upper track (114), and
wherein, when the track brake system (124) is deactivated, the partial upper track (114) is horizontally drivable into a different position along the annular rim (130) of the core shroud (132).

2. The apparatus of claim 1, wherein the annular rim (130) comprises a steam dam and the partial upper track (114) is positioned on the steam dam of the core shroud (132) as a result of its center of gravity.

3. The apparatus of claim 1, wherein the head (110) comprises a positioning pin (160) which is vertically extendable.

4. The apparatus of claim 3, wherein when the positioning pin (160) is extended, the track brake system (124) is released, and the partial upper track (114) is horizontally drivable along the annular rim (130) of the core shroud (132).

5. The apparatus of claim 1, wherein the frame (112) comprises bearing wheels (172) attached to the frame (112) such that the frame (112) is horizontally movable along the lower track (120).

6. The apparatus of claim 1, wherein the carriage (122) comprises at least one motor/gear combination (184A,B) and a pneumatic/hydraulic cylinder (185) such that the carriage (122) is horizontally movable along the lower track (120) and the scan arm (134) is pivotally movable relative to the carriage (122).

7. The apparatus of claim 1, wherein the sensor (182) is an ultrasonic transducer.

8. A method for inspecting a core shroud (132) of a nuclear reactor, comprising:
positioning an inspection tool (100) on an annular rim (130) of the core shroud (132) such that the tool (100) at least partially vertically extends into an annulus formed between the core shroud (132) and the nuclear reactor, the inspection tool (100) comprising:
a partial upper track (114) being positioned on the annular rim (130) and horizontally movable along the annular rim (130);
an assembly, comprising:
a head (110);
a frame (112) having a first end and a second end;
a lower track (120);
a carriage (122);
an arm assembly (134); and
at least one sensor (182) being connected to the arm assembly (134) for inspecting the core shroud (132); and
a track brake system (124); and
movably connecting the head (110) to the partial upper track (114) such that the head (110) is horizontally movable along the partial upper track (114);
mounting the first end of the frame (112) to the head (110) and connecting the second end of the frame (112) to the lower track (120) such that the lower track (120) is horizontally movable along the core shroud (132);
movably connecting the carriage (122) to the lower track (120);
connecting the arm assembly (134) to the carriage (122);
connecting a first driving mechanism (150) to the head (110) and to the partial upper track (114) for driving the head (110) along the partial upper track (114) and for driving the partial upper track (114) along the annular rim (130);
connecting a second driving mechanism (175) to the frame (112) for driving the lower track (120) along the core shroud (132);
connecting a third driving mechanism (184) to the carriage (122) for driving the carriage (122) along the lower track;
connecting the track brake system (124) to the partial upper track (114);
activating the track brake system (124) such that the partial upper track (114) remains stationary and the head (110) is movable along the partial upper track (114); and
deactivating the track brake system (124), such that the partial upper track (114) is drivable into a different position along the annular rim (130) of the core shroud (132).

9. The method of claim 8, wherein deactivating the track brake system (124) comprises horizontally moving the partial upper track (114) from a first position to a second position along the annular rim (130) of the core shroud (132) while the head (110) and frame (112) assembly remains stationary.

10. The method of claim 8, wherein the carriage (122) and arm (134) assembly is moved from a first position to a second position along the lower track (120) and the lower track (120) is moved from a first position to a second position relative to the head (110) and frame (112) assembly.

11. The method of claim 8, further comprising assessing the inspection results and determining if modification or repair of the core shroud (132) is needed.

## Patentansprüche

1. Vorrichtung (100) zur ferngesteuerten Überprüfung eines Kernreaktors, umfassend:
einen Kernmantel (132) mit einem ringförmigen Rand (130);
eine obere Teilschiene (114), die an dem ringförmigen Rand (130) des Kernmantels (132) positioniert und horizontal entlang des ringförmigen Randes (130) beweglich ist;
eine Anordnung umfassend:
einen Kopf (110), der beweglich mit der oberen Teilschiene (114) verbunden ist, so dass der Kopf (110) horizontal entlang der oberen Teilschiene (114) beweglich ist;
eine untere Schiene (120);
einen Rahmen (112) mit einem ersten Ende (116) und einem zweiten Ende (118), wobei das erste Ende (116) an dem Kopf (110) montiert ist und das zweite Ende (118) mit der unteren Schiene (120) verbunden ist, so dass die untere Schiene (120) entlang des Kernmantels (132) beweglich ist;
einen Schlitten (122), der beweglich mit der unteren Schiene (120) verbunden ist;
einen Abtastarm (134), der mit dem Schlitten (122) verbunden ist und sich vertikal entlang des Kernmantels (132) erstreckt;
zumindest einen Sensor (182), der mit dem Abtastarm (134) verbunden ist, zur Überprüfung des Kernmantels (132);
einen ersten Antriebsmechanismus (150), der mit dem Kopf (110) und der oberen Teilschiene (114) verbunden ist, und dazu aufgebaut ist, den Kopf (110) entlang der oberen Teilschiene (114) anzutreiben und die obere Teilschiene (114) entlang des ringförmigen Randes (130) anzutreiben;
einen zweiten Antriebsmechanismus (175), der mit dem Rahmen (112) verbunden und dazu aufgebaut ist, die untere Schiene (120) entlang des Kernmantels (132) anzutreiben;
**dadurch gekennzeichnet, dass** die Anordnung ferner umfasst:
einen dritten Antriebsmechanismus (184), der mit dem Schlitten (122) verbunden und dazu aufgebaut ist, den Schlitten (122) entlang der unteren Schiene (120) anzutreiben; und
ein Schienenbremssystem (124), das mit der oberen Teilschiene (114) verbunden ist,
wobei, wenn das Schienenbremssystem (124) aktiviert ist, die obere Teilschiene (114) feststehend bleibt und der Kopf (110) entlang der oberen Teilschiene (114) beweglich ist, und
wobei, wenn das Schienenbremssystem (124) deaktiviert ist, die obere Teilschiene (114) horizontal in eine unterschiedliche Stellung entlang des ringförmigen Randes (130) des Kernmantels (132) antreibbar ist.

2. Vorrichtung nach Anspruch 1, wobei der ringförmige Rand (130) eine Dampfsperre umfasst, und die obere Teilschiene (114) als Ergebnis ihres Schwerpunkts an der Dampfsperre des Kernmantels (132) positioniert ist.

3. Vorrichtung nach Anspruch 1, wobei der Kopf (110) einen Positionierbolzen (160) umfasst, der vertikal ausfahrbar ist.

4. Vorrichtung nach Anspruch 3, wobei, wenn der Positionierbolzen (160) ausgefahren ist, das Schienenbremssystem (124) gelöst ist, und die obere Teilschiene (114) horizontal entlang des ringförmigen Randes (130) des Kernmantels (132) antreibbar ist.

5. Vorrichtung nach Anspruch 1, wobei der Rahmen (112) Tragräder (172) umfasst, die an dem Rahmen (112) befestigt sind, so dass der Rahmen (112) horizontal entlang der unteren Schiene (120) beweglich ist.

6. Vorrichtung nach Anspruch 1, wobei der Schlitten (122) zumindest eine Motor-/Zahnrad-Kombination (184A, B) und einen pneumatischen/hydraulischen Zylinder (185) umfasst, so dass der Schlitten (122) horizontal entlang der unteren Schiene (120) beweglich ist und der Abtastarm (134) relativ zu dem Schlitten (122) schwenkbar beweglich ist.

7. Vorrichtung nach Anspruch 1, wobei der Sensor (182) ein Ultraschallmesswandler ist.

8. Verfahren zur Überprüfung eines Kernmantels (132) eines Kernreaktors, umfassend die folgenden Schritte:
Positionieren eines Überprüfungswerkzeugs (100) an einem ringförmigen Rand (130) des Kernmantels (132), so dass das Werkzeug (100) sich zumindest zum Teil vertikal in einen Ring erstreckt, der zwischen dem Kernmantel (132) und dem Kernreaktor ausgebildet ist,
wobei das Überprüfungswerkzeug (100) umfasst:
eine obere Teilschiene (114), die an dem ringförmigen Rand (130) des Kernmantels (130) positioniert und horizontal entlang des ringförmigen Randes (130) beweglich ist;
eine Anordnung umfassend:
einen Kopf (110);
einen Rahmen (112) mit einem ersten Ende und einem zweiten Ende;
eine untere Schiene (120);
einen Schlitten (122);
eine Armanordnung (134); und
zumindest einen Sensor (182), der mit der Armanordnung (134) verbunden ist, zur Überprüfung des Kernmantels (132); und
ein Schienenbremssystem (124); und
bewegliches Verbinden des Kopfs (110) mit der oberen Teilschiene (114), so dass der Kopf (110) horizontal entlang der oberen Teilschiene (114) beweglich ist;
Montieren des ersten Endes des Rahmens (112) an dem Kopf (110) und Verbinden des zweiten Endes des Rahmens (112) mit der unteren Schiene (120), so dass die untere Schiene (120) horizontal entlang des Kernmantels (132) beweglich ist;
bewegliches Verbinden des Schlittens (122) mit der unteren Schiene (120);
Verbinden der Armanordnung (134) mit dem Schlitten (122),
Verbinden eines ersten Antriebsmechanismus (150) mit dem Kopf (110) und der oberen Teilschiene (114), um den Kopf (110) entlang der oberen Teilschiene (114) anzutreiben und die obere Teilschiene (114) entlang des ringförmigen Randes (130) anzutreiben;
Verbinden eines zweiten Antriebsmechanismus (175) mit dem Rahmen (112), um die untere Schiene (120) entlang des Kernmantels (132) anzutreiben;
Verbinden eines dritten Antriebsmechanismus (184) mit dem Schlitten (122), um den Schlitten (122) entlang der unteren Schiene anzutreiben;
Verbinden des Schienenbremssystems (124) mit der oberen Teilschiene (114);
Aktivieren des Schienenbremssystems (124), so dass die obere Teilschiene (114) feststehend bleibt und der Kopf (110) entlang der oberen Teilschiene (114) beweglich ist; und
Deaktivieren des Schienenbremssystems (124), so dass die obere Teilschiene (114) horizontal in eine andere Stellung entlang des ringförmigen Randes (130) des Kernmantels (132) antreibbar ist.

9. Verfahren nach Anspruch 8, wobei das Deaktivieren des Schienenbremssystems (124) das horizontale Bewegen der oberen Teilschiene (114) aus einer ersten Stellung in eine zweite Stellung entlang des ringförmigen Randes (130) des Kernmantels (132) umfasst, während die Anordnung aus Kopf (110) und Rahmen (112) feststehend bleibt.

10. Verfahren nach Anspruch 8, wobei die Anordnung aus Schlitten (122) und Arm (134) aus einer ersten Stellung in eine zweite Stellung entlang der unteren Schiene (120) bewegt wird, und die untere Schiene (120) relativ zu der Anordnung aus Kopf (110) und Rahmen (112) bewegt wird.

11. Verfahren nach Anspruch 8, ferner umfassend das Bewerten der Überprüfungsergebnisse und das Bestimmen, ob eine Modifikation oder Reparatur des Kernmantels (132) nötig ist.

## Revendications

1. Appareil (100) pour l'inspection à distance d'un réacteur nucléaire, l'appareil comprenant :
une enveloppe du coeur (132) ayant un bord annulaire (130) ;
un rail partiel supérieur (114) positionné sur le bord annulaire (130) de l'enveloppe du coeur (132) et horizontalement déplaçable le long du bord annulaire (130) ;
un ensemble comprenant :
une tête (110) reliée de manière déplaçable au rail partiel supérieur (114), de telle manière que la tête (110) est horizontalement déplaçable le long du rail partiel supérieur (114) ;
un rail inférieur (120) ;
un cadre (112) avec une première extrémité (116) et une seconde extrémité (118), la première extrémité (116) étant montée à la tête (110) et la seconde extrémité (118) étant reliée au rail inférieur (120), de telle manière que le rail inférieur (120) est horizontalement déplaçable le long de l'enveloppe du coeur (132) ;
un chariot (122) relié de manière déplaçable au rail inférieur (120) ;
un bras de balayage (134) relié au chariot (122) et s'étendant verticalement vers le bas le long de l'enveloppe du coeur (132) ;
au moins un capteur (182) relié au bras de balayage (134) pour l'inspection de l'enveloppe du coeur (132) ;
un premier mécanisme d'entraînement (150) relié à la tête (110) et au rail partiel supérieur (114), et configuré pour entraîner la tête (110) le long du rail partiel supérieur (114) et pour entraîner le rail partiel supérieur (114) le long du bord annulaire (130) ;
un deuxième mécanisme d'entraînement (175) relié au cadre (112) et configuré pour entraîner le rail inférieur (120) le long de l'enveloppe du coeur (132) ;
**caractérisé en ce que** l'ensemble en outre comprend
un troisième mécanisme d'entraînement (184) relié au chariot (122) et configuré pour entraîner le chariot (122) le long du rail inférieur (120) ; et
un système de freinage de rail (124) relié au rail partiel supérieur (114),
dans lequel, lorsque le système de freinage de rail (124) est activé, le rail partiel supérieur (114) reste immobile et la tête (110) est déplaçable le long du rail partiel supérieur (114), et
dans lequel, lorsque le système de freinage de rail (124) est désactivé, le rail partiel supérieur (114) peut être entraîné horizontalement vers une position différente le long du bord annulaire (130) de l'enveloppe du coeur (132).

2. Appareil selon la revendication 1, dans lequel le bord annulaire (130) comprend une barrière de vapeur, et le rail partiel supérieur (114) est positionné sur la barrière de vapeur de l'enveloppe du coeur (132) comme résultat de son centre de gravité.

3. Appareil selon la revendication 1, dans lequel la tête (110) comprend une goupille de positionnement (160) verticalement extensible.

4. Appareil selon la revendication 3, dans lequel, lorsque la goupille de positionnement (160) est étendue, le système de freinage de rail (124) est desserré, et le rail partiel supérieur (114) peut être entraîné horizontalement le long du bord annulaire (130) de l'enveloppe du coeur (132).

5. Appareil selon la revendication 1, dans lequel le cadre (112) comprend des roues de support (172) fixées au cadre (112) de telle manière que le cadre (112) est horizontalement déplaçable le long du rail inférieur (120).

6. Appareil selon la revendication 1, dans lequel le chariot (122) comprend au moins une combinaison moteur / engrenage (184A, B) et un vérin pneumatique / hydraulique (185), de telle manière que le chariot (122) est horizontalement déplaçable le long du rail inférieur (120), et le bras de balayage (134) est mobile par rapport au chariot (122) de manière pivotante.

7. Appareil selon la revendication 1, dans lequel le capteur (182) est un transducteur ultrasonique.

8. Procédé pour l'inspection d'une enveloppe du coeur (132) d'un réacteur nucléaire, comprenant les étapes suivantes :
positionner un outil d'inspection (100) sur un bord annulaire (130) de l'enveloppe du coeur (132), de telle manière que l'outil (100) s'étend au moins partiellement verticalement dans un anneau formé entre l'enveloppe du coeur (132) et le réacteur nucléaire, l'outil d'inspection (100) comprenant :
un rail partiel supérieur (114) positionné sur le bord annulaire (130) et horizontalement déplaçable le long du bord annulaire (130) ;
un ensemble comprenant :
une tête (110) ;
a cadre (112) avec une première extrémité et une seconde extrémité ;
un rail inférieur (120) ;
un chariot (122) ;
un ensemble de bras (134) ; et
au moins un capteur (182) relié à l'ensemble de bras (134) pour l'inspection de l'enveloppe du coeur (132) ; et
un système de freinage de rail (124) ; et
relier de manière déplaçable la tête (110) au rail partiel supérieur (114), de telle manière que la tête (110) est horizontalement déplaçable le long du rail partiel supérieur (114) ;
monter la première extrémité du cadre (112) à la tête (110), et relier la seconde extrémité du cadre (112) au rail inférieur (120), de telle manière que le rail inférieur (120) est horizontalement déplaçable le long de l'enveloppe du coeur (132) ;
relier de manière déplaçable le chariot (122) au rail inférieur (120) ;
relier l'ensemble de bras (134) au chariot (122) ;
relier un premier mécanisme d'entraînement (150) à la tête (110) et au rail partiel supérieur (114), afin d'entraîner la tête (110) le long du rail partiel supérieur (114) et afin d'entraîner le rail partiel supérieur (114) le long du bord annulaire (130) ;
relier un deuxième mécanisme d'entraînement (175) au cadre (112) afin d'entraîner le rail inférieur (120) le long de l'enveloppe du coeur (132) ;
relier un troisième mécanisme d'entraînement (184) au chariot (122) afin d'entraîner le chariot (122) le long du rail inférieur ;
relier le système de freinage de rail (124) au rail partiel supérieur (114) ;
activer le système de freinage de rail (124) de telle manière que le rail partiel supérieur (114) reste immobile, et la tête (110) est déplaçable le long du rail partiel supérieur (114) ; et
désactiver le système de freinage de rail (124) de telle manière que le rail partiel supérieur (114) peut être entraîné horizontalement vers une position différente le long du bord annulaire (130) de l'enveloppe du coeur (132).

9. Procédé selon la revendication 8, dans lequel la désactivation du système de freinage de rail (124) comprend le déplacement horizontal du rail partiel supérieur (114) d'une première position vers une seconde position le long du bord annulaire (130) de l'enveloppe du coeur (132), lorsque l'ensemble de tête (110) et cadre (112) reste immobile.

10. Procédé selon la revendication 8, dans lequel l'ensemble de chariot (122) et bras (134) est déplacé d'une première position vers une seconde position le long du rail inférieur (120), et le rail inférieur (120) est déplacé d'une première position vers une seconde position par rapport à l'ensemble de tête (110) et cadre (112).

11. Procédé selon la revendication 8, en outre comprenant l'évaluation des résultats d'inspection et la détermination si une modification ou réparation de l'enveloppe du coeur (132) est nécessaire.
